# EUROPÄISCHE PATENTSCHRIFT

(11) **EP 3 092 166 B1**
(45) Veröffentlichungstag und Bekanntmachung des Hinweises auf die Patenterteilung: **10.06.2020**
(21) Anmeldenummer: 14809404.8
(22) Anmeldetag: 10.12.2014
(51) Int. Cl.: B62D 29/04, B29L 31/30

(54) **BAUTEIL FÜR EIN FAHRZEUG UND HERSTELLUNGSVERFAHREN**
COMPONENT FOR A VEHICLE AND PRODUCING METHOD
COMPOSANT POUR VÉHICULE ET PROCÉDÉ DE FABRICATION

(30) Priorität: 09.01.2014 DE 102014200248
(43) Veröffentlichungstag der Anmeldung: 16.11.2016
(73) Patentinhaber: Bayerische Motoren Werke Aktiengesellschaft, 80809 München (DE)
(72) Erfinder: SCHNAUFER, Thomas, 82386 Oberhausen (DE); JAHNKE, Peter, 85375 Neufahrn (DE); TIMMERMAN, Jan Jaap, 80803 München (DE); KOCH, Andre, 80335 München (DE)
(86) Internationale Anmeldenummer: PCT/EP2014/077101
(87) Internationale Veröffentlichungsnummer: WO 2015/104116

(56) Entgegenhaltungen:
- DE-U1-202007 003 905

## Beschreibung

Die Erfindung betrifft ein Verfahren zum Herstellen eines Karosseriebauteils für ein Fahrzeug sowie ein Karosseriebauteil als solches, aufweisend wenigstens einen in einem vorgebbaren Bereich des Bauteils angeordneten Probeabschnitt, der einstückig mit dem übrigen Bauteil über zumindest ein als Sollbruchstelle ausgebildetes Verbindungselement verbunden ist.

Die Erfindung betrifft insbesondere ein Verfahren zum Herstellen eines Bauteils, insbesondere Karosseriebauteils, für ein Fahrzeug, wobei wenigstens ein in einem vorgebbaren Bereich des Bauteils angeordneter Probeabschnitt des Bauteils unter Belassung von zumindest einem als Sollbruchstelle ausgebildeten, den Probeabschnitt einstückig mit dem übrigen Bauteil verbindenden Verbindungselement von dem übrigen Bauteil getrennt wird.

Für eine Qualitätssicherung bei einer Herstellung von Karosseriebauteilen für Fahrzeuge ist es erforderlich, hergestellte Karosseriebauteile einer Prüfung ihrer jeweiligen Eigenschaften zu unterziehen bzw. zu prüfen, ob diese Eigenschaften vorgegebene Anforderungen erfüllen.

Bei der Herstellung eines Karosseriebauteils aus einem Faserverbundwerkstoff entsteht der hierzu eingesetzte Werkstoff während der Herstellung des Bauteils. Werkstoffeigenschaften können daher nur indirekt über der Bauteilherstellung vorgeschaltete Prüfungen erfolgen. Eine direkte Prüfung von Eigenschaften des Werkstoffs bei fertiggestelltem Bauteil ist bislang lediglich relativ aufwändig im Zuge der Prüfung von einzelnen Bauteilen möglich. Solche Einzelprüfungen sind jedoch im industriellen Maßstab, das heißt bei einer Massenfertigung von Bauteilen, statistisch nicht auswertbar und daher nur unzureichend für eine Qualitätssicherung verfügbar.

DE 20 2007 003 905 U1 offenbart eine Kunststoffträgerplatte für ein Türmodul einer Fahrzeugtür, wobei zur Verstärkung Fasern in die Kunststoffträgerplatte eingelagert sind. An die Kunststoffträgerplatte sind Ansatzteile angeformt, die beabstandet zueinander am Umfang der Kunststoffträgerplatte angeordnet sind und ausgebildet und vorgesehen sind, die Ausrichtung der Fasern in einem umfänglichen Randbereich der Kunststoffträgerplatte zu beeinflussen.

Aufgabe der Erfindung ist es, eine Möglichkeit zur Qualitätsprüfung von in großer Stückzahl hergestellten Bauteilen, insbesondere Karosseriebauteilen, für Fahrzeuge zu schaffen.

Diese Aufgabe wird durch ein Verfahren mit den Merkmalen gemäß Anspruch 1 und durch ein Karosseriebauteil mit den Merkmalen gemäß Anspruch 5 gelöst. Vorteilhafte Ausgestaltungen sind in den Unteransprüchen wiedergegeben, welche jeweils für sich genommen oder in verschiedener Kombination miteinander einen Aspekt der Erfindung darstellen können.

Erfindungsgemäß ist bei dem Bauteil der eingangs genannten Art wenigstens ein zusammenhängender Umfangsabschnitt des Probeabschnitts durch ein Trennverfahren von dem übrigen Bauteil getrennt.

Der Probeabschnitt kann nach der Herstellung eines erfindungsgemäßen Bauteils auf einfache Art und Weise von dem übrigen Bauteil entfernt und einer Qualitätsprüfung zugeführt werden. Da der Probeabschnitt Bestandteil des Bauteils und somit aus demselben Werkstoff wie das übrige Bauteil hergestellt ist, kann aus der zu prüfenden Qualität des Probeabschnitts auf die Qualität des gesamten Bauteils rückgeschlossen werden.

Das Bauteil wird durch die Entnahme des Probeabschnitts zerstört und ist nicht mehr brauchbar. Durch die Entnahme der Vielzahl von Probeabschnitten aus den Bauteilen bzw. die damit verbundene Verfügbarkeit der Vielzahl von

Probeabschnitten für Qualitätsprüfungen, ist mittels der Qualitätsprüfungen eine Vielzahl von statistisch auswertbaren Prüfungsergebnissen generierbar. Insbesondere kann durch eine Korrelation von Prozessparametern, einen standardisierten Entnahmeprozess sowie standardisierte Entnahmestellen eine Qualitätssicherung im industriellen Maßstab erreicht werden.

Eine Zuordnung einzelner Prüfergebnisse zu einzelnen Bauteilen ermöglicht zudem die Rückverfolgung der Herstellungskette beim Auftraten von unakzeptablen Abweichungen der Qualität einzelner Bauteile, wodurch eine Fehlerquellenermittlung und eine genaue Überwachung eines Herstellungsprozesses möglich sind.

Ist lediglich ein zusammenhängender Umfangsabschnitt des Probeabschnitts von dem übrigen Bauteil getrennt, ist der Probeabschnitt über lediglich ein einziges als Sollbruchstelle ausgebildetes Verbindungselement mit dem übrigen Bauteil verbunden. Sind zwei oder mehrere nicht miteinander zusammenhängende Umfangsabschnitte des Probeabschnitts von dem übrigen Bauteil getrennt, ist das Bauteil über zwei oder mehrere als Sollbruchstelle ausgebildete Verbindungselemente mit dem übrigen Bauteil verbunden.

Das Verbindungselement kann beispielsweise als Ausbrechlasche ausgebildet sein.

Gemäß einer vorteilhaften Ausgestaltung sind der Probeabschnitt und zumindest der den Probeabschnitt umgebende Bereich des Bauteils aus einem Faserverbundwerkstoff ausgebildet. Der Vorteil der Erfindung zeigt sich insbesondere bei der Qualitätssicherung bei der Herstellung von Bauteilen aus einem Faserverbundwerkstoff. Als Faserverbundwerkstoff kann beispielsweise ein Faserverbundkunststoff dienen. Das übrige Bauteil kann auch vollständig aus einem Faserverbundwerkstoff ausgebildet sein.

Nach einer weiteren vorteilhaften Ausgestaltung ist der zusammenhängende Umfangsabschnitt durch Wasserstrahlschneiden oder Laserschneiden von dem übrigen Bauteil getrennt. Wasserstrahlschneiden hat den Vorteil, dass während des Schneidens nahezu kein Wärmeeintrag in den Probeabschnitt und/oder das übrige Bauteil erfolgt, welcher die Qualität des Probeabschnitts derart verändern könnte, dass aus der Qualität des Probeabschnitts nur unzureichend auf die Qualität des übrigen Bauteils geschlossen werden kann. In einer weiteren vorteilhaften Ausführungsform ist an dem Probeabschnitt wenigstens ein Positionierungsabschnitt ausgebildet, welcher zur geeigneten Positionierung des Probeabschnitts in einer zur Prüfung des Probeabschnitts verwendeten Prüfeinrichtung dient. Dies begünstigt eine konstruktiv einfache, schnelle und automatisierte Prüfung von in hoher Stückzahl hergestellten Bauteilen, insbesondere da eine geeignete Positionierung von zu prüfenden Probeabschnitten relativ zu einer Prüfeinrichtung nahezu automatisch herbeigeführt wird, ohne das hierzu ein apparativer Aufwand erforderlich ist. Je nach Bedarf und/oder Ausgestaltung des Probeabschnitts können an dem Probeabschnitt auch zwei oder mehrere entsprechende Positionierungsabschnitte angeordnet sein. Der Positionierungsabschnitt kann als am Umfang des Probeabschnitts ausgebildete Nase oder Ausnehmung ausgebildet sein.

Weiter erfindungsgemäß wird bei dem Verfahren der eingangs genannten Art wenigstens ein zusammenhängender Umfangsabschnitt des Probeabschnitts durch ein Trennverfahren von dem übrigen Bauteil getrennt.

Mit diesem Verfahren sind die oben mit Bezug auf das Bauteil genannten Vorteile entsprechend verbunden.

Eine vorteilhafte Ausgestaltung sieht vor, dass der Probeabschnitt und zumindest der den Probeabschnitt umgebende Bereich des Bauteils aus einem Faserverbundwerkstoff ausgebildet werden. Der Vorteil des erfindungsgemäßen Verfahrens zeigt sich insbesondere bei der Qualitätssicherung bei der Herstellung von Bauteilen aus einem Faserverbundwerkstoff. Als Faserverbundwerkstoff kann beispielsweise ein Faserverbundkunststoff verwendet werden.

Gemäß einer weiteren vorteilhaften Ausgestaltung wird der zusammenhängende Umfangsabschnitt durch Wasserstrahlschneiden oder Laserschneiden von dem übrigen Bauteil getrennt. Mit dieser Ausgestaltung sind die oben mit Bezug auf die entsprechende Ausgestaltung des Bauteils genannten Vorteile entsprechend verbunden.

Es wird weiter als vorteilhaft erachtet, wenn an dem Probeabschnitt wenigstens ein Positionierungsabschnitt ausgebildet wird, welcher zur geeigneten Positionierung des Probeabschnitts in einer zur Prüfung des Probeabschnitts verwendeten Prüfeinrichtung dient. Auch mit dieser Ausgestaltung sind die oben mit Bezug auf die entsprechende Ausgestaltung des Bauteils genannten Vorteile entsprechend verbunden.

Weitere Einzelheiten, Merkmale und Vorteile der Erfindung ergeben sich aus der nachfolgenden Beschreibung und den Figuren. Es zeigen:
- Figur 1: eine Seitenansicht eines Ausführungsbeispiels für ein erfindungsgemäßes Bauteil,
- Figur 2: eine schematische Draufsicht eines dem in Figur 1 gezeigten Bauteil entnommenen Probeabschnitts,
- Figur 3: eine schematische Draufsicht eines weiteren dem in Figur 1 gezeigten Bauteil entnommenen Probeabschnitts,
- Figur 4: eine schematische Draufsicht eines weiteren dem in Figur 1 gezeigten Bauteil entnommenen Probeabschnitts,
- Figur 5: eine schematische Draufsicht eines weiteren dem in Figur 1 gezeigten Bauteil entnommenen Probeabschnitts,
- Figur 6: eine schematische Draufsicht eines weiteren dem in Figur 1 gezeigten Bauteil entnommenen Probeabschnitts,
- Figur 7: eine perspektivische Darstellung eines Ausschnitts eines Ausführungsbeispiels für ein erfindungsgemäßes Bauteil, und
- Figur 8: eine perspektivische Darstellung eines dem in Figur 7 gezeigten Bauteil entnommenen Probeabschnitts.

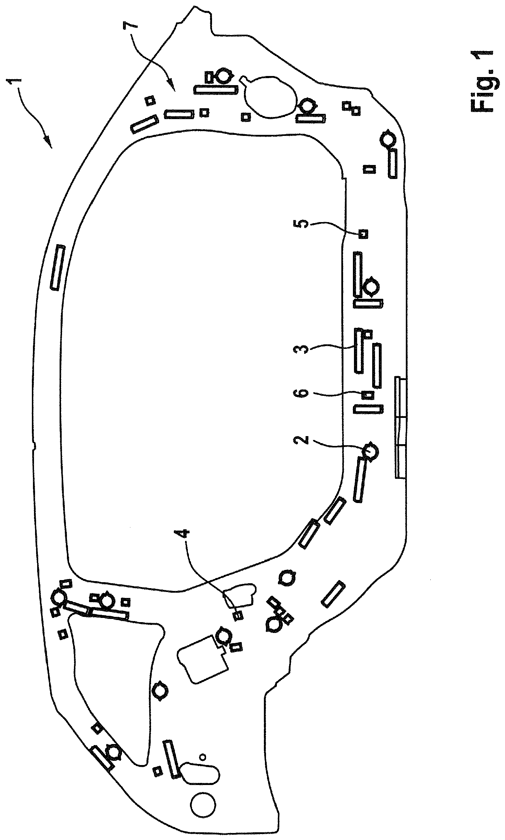

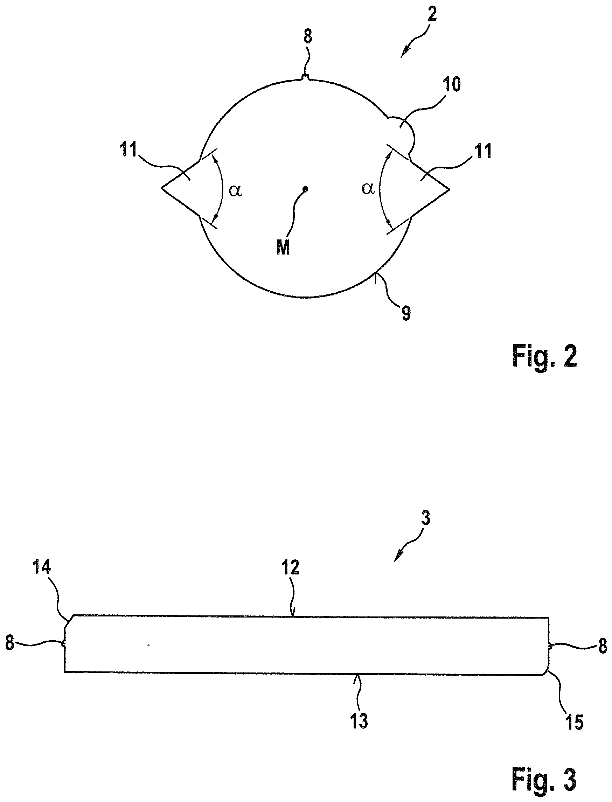

Figur 1 zeigt eine Seitenansicht eines Ausführungsbeispiels für ein erfindungsgemäßes Bauteil 1 in Form eines aus einem Faserverbundkunststoff gebildeten Karosseriebauteils für ein nicht gezeigtes Kraftfahrzeug. In vorgebbaren Bereichen des Bauteils 1 ist jeweils ein Probeabschnitt 2, 3, 4, 5 oder 6 des Bauteils 1 angeordnet. Die Ausgestaltung der Probeabschnitte 2, 3, 4, 5 und 6 ergibt sich deutlicher aus den Figuren 2, 3, 4, 5 bzw. 6.

Figur 2 zeigt eine schematische Draufsicht eines dem in Figur 1 gezeigten Bauteil entnommenen Probeabschnitts 2. Der Probeabschnitt 2 ist einstückig mit dem übrigen Bauteil 7 über ein als Sollbruchstelle und als Ausbrechlasche ausgebildetes Verbindungselement 8 verbunden. Ein einziger zusammenhängender Umfangsabschnitt 9 des Probeabschnitts 2 ist durch Wasserstrahlschneiden von dem übrigen Bauteil 7 getrennt. An dem Probeabschnitt 2 ist ein als am Umfangsabschnitt 9 angeordnete Nase ausgebildeter Positionierungsabschnitt 10 ausgebildet, welcher zur geeigneten Positionierung des Probeabschnitts 2 in einer zur Prüfung des Probeabschnitts 2 verwendeten, nicht gezeigten Prüfeinrichtung dient. Des Weiteren sind an dem Umfangsabschnitt 9 auf einander diametral gegenüberliegenden Seiten des Probeabschnitts 2 zwei Prüfspitzen 11 angeordnet. Jede Prüfspitze 11 weist zwei Schenkel auf, zwischen denen der Winkel α=72° angeordnet ist. Hierdurch kann der Probeabschnitt 2 auf gewünschte Art und Weise in einer Prüfeinrichtung ausgerichtet werden. Hierbei sollte der Probeabschnitt 2 entlang einer Hauptfaserrichtung des Faserverbundstoffs ausgerichtet sein. Dies kann mittels einer Drapiersimulation, einer FE-basierten Umformsimulation oder einer aus einem Realbauteil zurückgeführten Orientierung erfolgen. Der Probeabschnitt 2 kann mittels Schliffpräparation derart bearbeitet werden, dass der Faserwinkel der Fasern des Faserverbundkunststoffs ermittelbar ist. Alternativ kann dieser Faserwinkel mittels Mikrocomputertomographie ermittelt werden. Hierzu kann der Probeabschnitt 2 verkleinert werden, wenn der Prüfabschnitt 2 zu groß für eine zur Microcomputertomographie eingesetzten Prüfeinrichtung ist. Der Durchmesser des Probeabschnitts 2 kann in einem Bereich von 30 mm bis 45 mm liegen. Der Abstand zwischen den voneinander weg weisenden Spitzen der Prüfspitzen 11 kann in einem Bereich von 40 mm bis 50 mm liegen. Der Positionierungsabschnitt 10 kann einen Durchmesser in einem Bereich von 5 mm bis 10 mm aufweisen. Der Abstand des am weitesten von dem Mittelpunkt M des Probeabschnitts 2 entfernt angeordneten Teils des Positionierungsabschnitts 10 kann in einem Bereich von 10 mm bis 15 mm liegen.

Figur 3 zeigt eine schematische Draufsicht eines weiteren dem in Figur 1 gezeigten Bauteil entnommenen Probeabschnitts 3. Der Probeabschnitt 3 ist einstückig mit dem übrigen Bauteil 7 über zwei jeweils als Sollbruchstelle und als Ausbrechlasche ausgebildete Verbindungselemente 8 verbunden. Zwei zusammenhängende Umfangsabschnitte 12 und 13 des Probeabschnitts 2 sind durch Wasserstrahlschneiden von dem übrigen Bauteil 7 getrennt. Der Probeabschnitt 3 kann für eine Zug- oder Biegeprüfung herangezogen werden. Hierbei kann an dem Probeabschnitt 3 auch eine Preformüberlappung ausgebildet sein, also ein Bereich im Faserverbundkunststoff, in dem sich zwei textile Faserbestandteile gegenseitig überlappen, wodurch der Probeabschnitt 3 in diesem Bereich eine größere Dicke aufweist. Es ist hierbei durchgängig eine Ausrichtung an Hand der geometrischen Referenz des Probeabschnitts 3 sicherzustellen. An der oben links dargestellten Ecke des Probeabschnitts 3 ist eine Fase 14 und an der unten rechts dargestellten Ecke des Probeabschnitts 3 ist eine Abrundung 15 angeordnet. Durch die Fase 14 und die Abrundung 15 lässt sich der Probeabschnitt 3 in einer Prüfeinrichtung ausrichten. Dies ist insbesondere relevant, wenn beispielsweise auf Biege belastete Probeabschnitte 3 unterschiedliche Ergebnisse liefern, wenn die Probe umgedreht wird. Durch eine durchgängige und gewünschte Ausrichtung des Probeabschnitts 3 in einer entsprechenden Prüfeinrichtung kann eine Ursachenforschung für das jeweilige Bruchbild besser erfolgen.

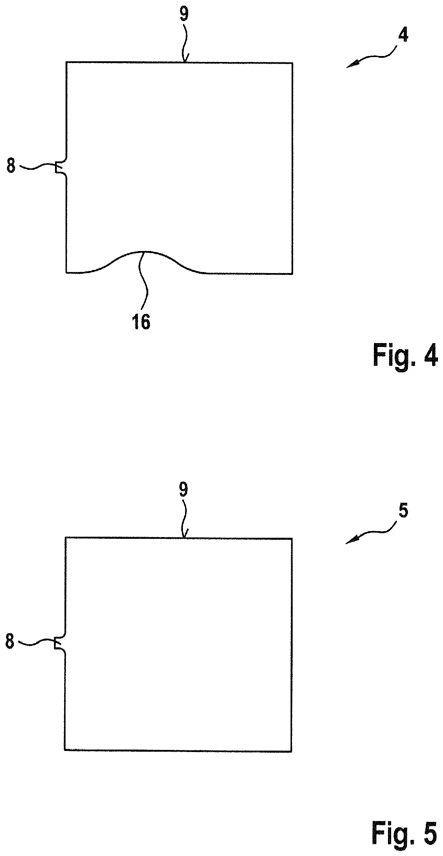

Figur 4 zeigt eine schematische Draufsicht eines weiteren dem in Figur 1 gezeigten Bauteil entnommenen Probeabschnitts 4. Der Probeabschnitt 4 ist einstückig mit dem übrigen Bauteil 7 über ein als Sollbruchstelle und als Ausbrechlasche ausgebildetes Verbindungselement 8 verbunden. Ein einziger zusammenhängender Umfangsabschnitt 9 des Probeabschnitts 4 ist durch Wasserstrahlschneiden von dem übrigen Bauteil 7 getrennt. Der Faserverbundkunststoff des Probeabschnitts 4 weist üblicherweise mehrere aus Fasern gebildete Einzellagen auf, welche eine definierte Einzellagenschichtdicke aufweisen. Diese Einzellagenschichtdicken können über eine Schliffprobe ermittelt werden. An dem Probeabschnitt 4 ist ein als am Umfangsabschnitt 9 angeordnete Ausnehmung ausgebildeter Festlegungsabschnitt 16 ausgebildet, welcher zur Festlegung der jeweiligen zur Schliffprobe verwendeten Schliffebene dient. Die Geometrie des Probeabschnitts 4 garantiert eine eindeutige Zuordnung der Laminatschichten.

Figur 5 zeigt eine schematische Draufsicht eines weiteren dem in Figur 1 gezeigten Bauteil entnommenen Probeabschnitts 5. Der Probeabschnitt 5 ist einstückig mit dem übrigen Bauteil 7 über ein als Sollbruchstelle und als Ausbrechlasche ausgebildetes Verbindungselement 8 verbunden. Ein einziger zusammenhängender Umfangsabschnitt 9 des Probeabschnitts 5 ist durch Wasserstrahlschneiden von dem übrigen Bauteil 7 getrennt. Der Probeabschnitt 5 kann für die Durchführung einer dynamischen Differenzkalorimetrie (Differential Scanning Calorimetrie; DSC) verwendet werden, wobei die jeweilig abgegebene oder aufgenommene Wärmemenge des Probenabschnitts 5 bei Abkühlung bzw. Aufheizung des Probeabschnitts 5 oder bei einem isothermen Prozess gemessen werden kann.

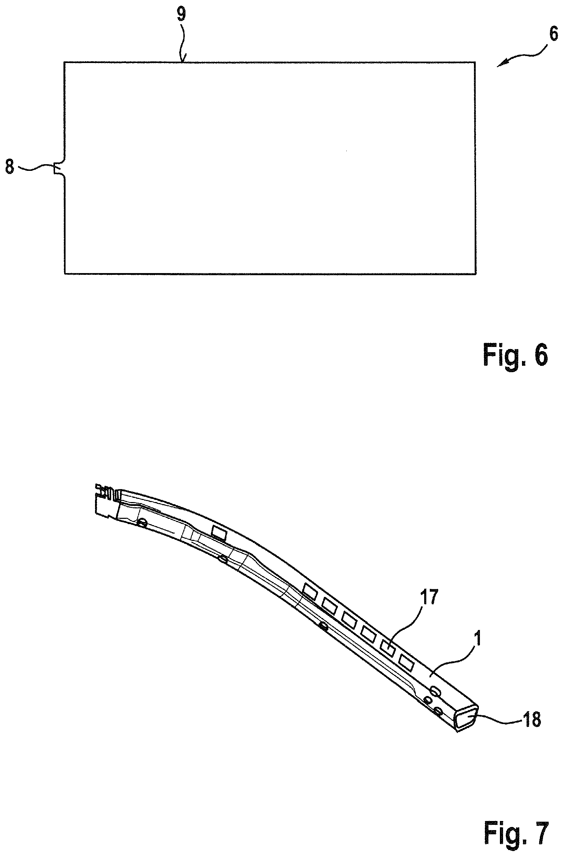

Figur 6 zeigt eine schematische Draufsicht eines weiteren dem in Figur 1 gezeigten Bauteil entnommenen Probeabschnitts 6. Der Probeabschnitt 6 ist einstückig mit dem übrigen Bauteil 7 über ein als Sollbruchstelle und als Ausbrechlasche ausgebildetes Verbindungselement 8 verbunden. Ein einziger zusammenhängender Umfangsabschnitt 9 des Probeabschnitts 6 ist durch Wasserstrahlschneiden von dem übrigen Bauteil 7 getrennt. Der Probeabschnitt 6 kann für die Durchführung einer thermogravimetrischen Analyse (TGA) verwendet werden. Der Probeabschnitt 6 kann eine Länge von 35 mm und eine Breite von 20 mm aufweisen. Die längeren Seiten des Probeabschnitts 6 können unter einem Winkel von 90° zu dem 0°-Winkel der Faserrichtung ausgerichtet sein. Alternativ können die längeren Seiten des Probeabschnitts 6 unter einem Winkel von 0° zu dem 0°-Winkel der Faserrichtung ausgerichtet sein.

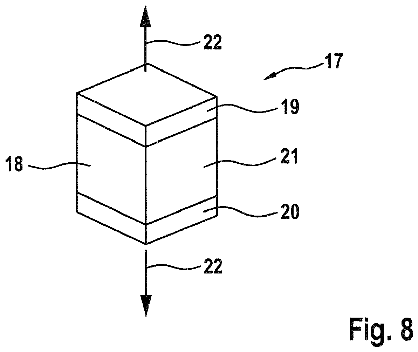

Figur 7 zeigt eine perspektivische Darstellung eines Ausschnitts eines Ausführungsbeispiels für ein erfindungsgemäßes Bauteil 1 in Form eines aus einem Faserverbundkunststoff gebildeten Karosseriebauteils für ein nicht gezeigtes Kraftfahrzeug. Das Karosseriebauteil bildet später eine A-Säule eines entsprechenden Kraftfahrzeugs. Das Karosseriebauteil ist mit einem Kernmaterial 18, beispielsweise einem PUR-Schaum, gefüllt, welches der Verstärkung des Karosseriebauteils dient. In vorgebbaren Bereichen des Bauteils 1 ist jeweils ein Probeabschnitt 17 des Bauteils 1 angeordnet. Die Ausgestaltung der Probeabschnitte 17 ergibt sich deutlicher aus Figur 8.

Figur 8 zeigt eine perspektivische Darstellung eines dem in Figur 7 gezeigten Bauteil 1 entnommenen Probeabschnitts 17. Der Probeabschnitt 17 ist quaderförmig ausgebildet und einstückig mit dem übrigen Bauteil 7 über wenigstens ein als Sollbruchstelle und als Ausbrechlasche ausgebildetes, nicht näher dargestelltes Verbindungselement verbunden. Wenigstens ein zusammenhängender Umfangsabschnitt des Probeabschnitts 17 ist durch Wasserstrahlschneiden von dem übrigen Bauteil 7 getrennt. Der Probeabschnitt 17 weist zwei Faserverbundlagen 19 und 20 und eine dazwischen angeordnete Kernmateriallage 21 auf. Zur Prüfung der Schaumhaftung eines mit einem PUR-Kernmaterial 18 versehenen Bauteils 1 kann der Probeabschnitt 17 orthogonal zur Oberfläche der Faserverbundlagen 19 und 20 entsprechend den in Figur 8 gezeigten Pfeilen 22 mit einer Zugkraft beaufschlagt werden. Hierzu kann der Probeabschnitt 17 an einer Probeaufnahme angeordnet sein, welche zweiseitig kardanisch gelagert ist.

### Bezugszeichenliste:

- 1: Bauteil
- 2: Probeabschnitt
- 3: Probeabschnitt
- 4: Probeabschnitt
- 5: Probeabschnitt
- 6: Probeabschnitt
- 7: übriges Bauteil
- 8: Verbindungselement
- 9: Umfangsabschnitt
- 10: Positionierungsabschnitt
- 11: Prüfspitze
- 12: Umfangsabschnitt
- 13: Umfangsabschnitt
- 14: Fase
- 15: Abrundung
- 16: Festlegungsabschnitt
- 17: Probeabschnitt
- 18: Kernmaterial
- 19: Faserverbundlage
- 20: Faserverbundlage
- 21: Kernmateriallage
- 22: Pfeil
- M: Mittelpunkt

## Patentansprüche

1. Verfahren zum Herstellen eines Karosseriebauteils für ein Fahrzeug, wobei wenigstens ein in einem vorgebbaren Bereich des Karosseriebauteils (1) angeordneter Probeabschnitt (2, 3, 4, 5, 6, 17) des Karosseriebauteils (1) unter Belassung von zumindest einem als Sollbruchstelle ausgebildeten, den Probeabschnitt (2, 3, 4, 5, 6, 17) einstückig mit dem übrigen Bauteil (7) verbindenden Verbindungselement (8) von dem übrigen Bauteil (7) getrennt wird,
**dadurch gekennzeichnet,**
**dass** wenigstens ein zusammenhängender Umfangsabschnitt (9, 12, 13) des Probeabschnitts (2, 3, 4, 5, 6, 17) durch ein Trennverfahren von dem übrigen Bauteil (7) getrennt wird.

2. Verfahren nach Anspruch 1, **dadurch gekennzeichnet, dass** der Probeabschnitt (2, 3, 4, 5, 6, 17) und zumindest der den Probeabschnitt (2, 3, 4, 5, 6, 17) umgebende Bereich des Karosseriebauteils (1) aus einem Faserverbundwerkstoff ausgebildet werden.

3. Verfahren nach einem der vorangehenden Ansprüche, **dadurch gekennzeichnet, dass** der zusammenhängende Umfangsabschnitt (9, 12, 13) durch Wasserstrahlschneiden von dem übrigen Bauteil (7) getrennt wird.

4. Verfahren nach einem der vorangehenden Ansprüche, **dadurch gekennzeichnet, dass** an dem Probeabschnitt (2, 3, 4, 5, 6, 17) wenigstens ein Positionierungsabschnitt (10, 16) ausgebildet wird, welcher zur geeigneten Positionierung des Probeabschnitts (2, 3, 4, 5, 6, 17) in einer zur Prüfung des Probeabschnitts (2, 3, 4, 5, 6, 17) verwendeten Prüfeinrichtung dient.

5. Karosseriebauteil (1) für ein Fahrzeug, welches
- mit einem Verfahren nach einem der vorangehenden Ansprüche ausbildbar ist,
- wenigstens einen in einem vorgebbaren Bereich des Karosseriebauteils (1) angeordneten Probeabschnitt (2, 3, 4, 5, 6, 17) aufweist, der einstückig mit dem übrigen Bauteil (7) über zumindest ein als Sollbruchstelle ausgebildetes Verbindungselement (8) verbunden ist, und
- bei welchem wenigstens ein zusammenhängender Umfangsabschnitt (9, 12, 13) des Probeabschnitts (2, 3, 4, 5, 6, 17) durch ein Trennverfahren von dem übrigen Bauteil (7) getrennt ist.

6. Karosseriebauteil (1) nach Anspruch 5, **dadurch gekennzeichnet, dass** der Probeabschnitt (2, 3, 4, 5, 6, 17) und zumindest der den Probeabschnitt (2, 3, 4, 5, 6, 17) umgebende Bereich des Karosseriebauteils (1) aus einem Faserverbundwerkstoff ausgebildet sind.

7. Karosseriebauteil (1) nach Anspruch 5 oder 6, **dadurch gekennzeichnet, dass** der zusammenhängende Umfangsabschnitt (9, 12, 13) durch Wasserstrahlschneiden oder Laserschneiden von dem übrigen Bauteil (7) getrennt ist.

8. Karosseriebauteil (1) nach einem der Ansprüche 5 bis 7, **dadurch gekennzeichnet, dass** an dem Probeabschnitt (2, 3, 4, 5, 6, 17) wenigstens ein Positionierungsabschnitt (10, 16) ausgebildet ist, welcher zur geeigneten Positionierung des Probeabschnitts (2, 3, 4, 5, 6, 17) in einer zur Prüfung des Probeabschnitts (2, 3, 4, 5, 6, 17) verwendeten Prüfeinrichtung dient.

## Claims

1. A method for producing a body component for a vehicle, wherein at least one sample portion (2, 3, 4, 5, 6, 17) of the body component (1) arranged in a region of the body component (1) which can be predetermined is separated from the rest of the component (7), leaving at least one connecting element (8) which is designed as a predetermined breaking point and connects the sample portion (2, 3, 4, 5, 6, 17) in one piece to the rest of the component (7),
**characterised in that**
at least one coherent peripheral portion (9, 12, 13) of the sample portion (2, 3, 4, 5, 6, 17) is separated from the rest of the component (7) by a separation method.

2. A method according to Claim 1, **characterised in that** the sample portion (2, 3, 4, 5, 6, 17) and at least that region of the body component (1) which surrounds the sample portion (2, 3, 4, 5, 6, 17) are formed from a fibre composite material.

3. A method according to one of the preceding claims, **characterised in that** the coherent peripheral portion (9, 12, 13) is separated from the rest of the component (7) by waterjet cutting.

4. A method according to one of the preceding claims, **characterised in that** at least one positioning portion (10, 16) is formed on the sample portion (2, 3, 4, 5, 6, 17), which positioning portion serves for suitably positioning the sample portion (2, 3, 4, 5, 6, 17) in a testing means used for testing the sample portion (2, 3, 4, 5, 6, 17).

5. A body component (1) for a vehicle, which
- can be formed with a method according to one of the preceding claims,
- has at least one sample portion (2, 3, 4, 5, 6, 17) arranged in a region of the body component (1) which can be predetermined, which is connected in one piece to the rest of the component (7) by way of at least one connecting element (8) designed as a predetermined breaking point, and
- in which at least one coherent peripheral portion (9, 12, 13) of the sample portion (2, 3, 4, 5, 6, 17) is separated from the rest of the component (7) by a separation method.

6. A body component (1) according to Claim 5, **characterised in that** the sample portion (2, 3, 4, 5, 6, 17) and at least that region of the body component (1) which surrounds the sample portion (2, 3, 4, 5, 6, 17) are formed from a fibre composite material.

7. A body component (1) according to Claim 5 or Claim 6, **characterised in that** the coherent peripheral portion (9, 12, 13) is separated from the rest of the component (7) by waterjet cutting or laser cutting.

8. A body component (1) according to one of Claims 5 to 7, **characterised in that** at least one positioning portion (10, 16) is formed on the sample portion (2, 3, 4, 5, 6, 17), which positioning portion serves for suitably positioning the sample portion (2, 3, 4, 5, 6, 17) in a testing means used for testing the sample portion (2, 3, 4, 5, 6, 17).

## Revendications

1. Procédé de fabrication d'un composant de carrosserie destiné à un véhicule selon lequel au moins un segment échantillon (2, 3, 4, 5, 6, 17) du composant de carrosserie (1) situé dans une zone pouvant être prédéfinie de ce composant de carrosserie (1) est séparé de la partie restante (7) du composant en maintenant au moins un élément de liaison (8) réalisé en tant qu'emplacement de rupture de consigne, reliant le segment échantillon (2, 3, 4, 5, 6, 17) en une seule pièce avec la partie restante (7) du composant,
**caractérisé en ce qu'**
au moins un segment périphérique continu (9, 12, 13) du segment échantillon (2, 3, 4, 5, 6, 17) est séparé de la partie restante (7) du composant par un procédé de séparation.

2. Procédé conforme à la revendication 1,
**caractérisé en ce que**
le segment échantillon (2, 3, 4, 5, 6, 17) et au moins la zone du composant de carrosserie (1) entourant ce segment échantillon (2, 3, 4, 5, 6, 17) sont réalisés en un matériau composite renforcé par des fibres.

3. Procédé conforme à l'une des revendications précédentes,
**caractérisé en ce que**
le segment périphérique continu (9, 12, 13) est séparé de la partie restante (7) du composant par découpe par jet d'eau.

4. Procédé conforme à l'une des revendications précédentes,
**caractérisé en ce que**
sur le segment échantillon (2, 3, 4, 5, 6, 17) est formé au moins un segment de positionnement (10, 16) qui sert à permettre un positionnement adapté du segment échantillon (2, 3, 4, 5, 6, 17) dans un dispositif de contrôle utilisé pour contrôler ce segment échantillon (2, 3, 4, 5, 6, 17).

5. Composant de carrosserie (1) destiné à un véhicule,
- pouvant être formé par un procédé conforme à l'une des revendications précédentes,
- comportant au moins un segment échantillon (2, 3, 4, 5, 6, 17) situé dans une zone pouvant être prédéfinie du composant de carrosserie (1), qui est relié en une seule pièce avec la partie restante (7) du composant par l'intermédiaire d'au moins un élément de liaison (8) réalisé sous la forme d'un emplacement de rupture de consigne, et
- dans lequel au moins un segment périphérique continu (9, 12, 13) du segment échantillon (2, 3, 4, 5, 6, 17) est séparé de la partie restante (7) du composant par un procédé de séparation.

6. Composant de carrosserie (1) conforme à la revendication 5,
**caractérisé en ce que**
le segment échantillon (2, 3, 4, 5, 6, 17) et au moins la zone du composant de carrosserie (1) entourant ce segment échantillon (2, 3, 4, 5, 6, 17) sont réalisés en un matériau composite renforcé par des fibres.

7. Composant de carrosserie (1) conforme à la revendication 5 ou 6,
**caractérisé en ce que**
le segment périphérique continu (9, 12, 13) est séparé de la partie restante (7) du composant par découpe par jet d'eau ou découpes laser.

8. Composant de carrosserie (1) conforme à l'une des revendications 5 à 7,
**caractérisé en ce que**
sur le segment échantillon (2, 3, 4, 5, 6, 17) est formé au moins un segment de positionnement (10, 16) qui sert à permettre un positionnement adapté du segment échantillon (2, 3, 4, 5, 6, 17) dans un dispositif de contrôle utilisé pour contrôler ce segment échantillon (2, 3, 4, 5, 6, 17).
